# EUROPEAN PATENT SPECIFICATION

(11) **EP 4 326 088 B1**
(45) Date of publication and mention of the grant of the patent: **28.01.2026**
(21) Application number: 22724526.3
(22) Date of filing: 18.04.2022
(51) Int. Cl.: A23L 2/38, A23L 2/74, A23L 7/10, A23J 1/00, A23J 1/12

(54) **OAT FRACTIONATION PROCESS**
HAFERFRAKTIONIERUNGSVERFAHREN
PROCÉDÉ DE FRACTIONNEMENT D'AVOINE

(30) Priority: 20.04.2021 US 202163176936 P
(43) Date of publication of application: 28.02.2024
(73) Proprietor: Fairlife, LLC, Chicago, IL 60607 (US)
(72) Inventor: GROSSBIER, Dustin, Minneaoplis, MN 55417 (US); UR REHMAN, Shakeel, Naperville, IL 60564 (US); DOELMAN, Timothy P., Glencoe, IL 60022 (US); BACKINOFF, Scott Bruce, McMinnville, OR 97128 (US); CHAUHAN, Jaydeepsinh M., Schaumburg, IL 60193 (US); ADAMSON, Nicholas, Grand Rapids, MI 49506 (US)
(74) Representative: Bohest AG
(86) International application number: PCT/US2022/025235
(87) International publication number: WO 2022/225856

(56) References cited:
- EP-A1- 0 619 950
- US-A1- 2014 356 510
- DATABASE GNPD [online] MINTEL; 12 January 2021 (2021-01-12), ANONYMOUS: "Spicy Vanilla Oat Protein Drink", XP055955365, retrieved from https://www.gnpd.com/sinatra/recordpage/8402619/ Database accession no. 8402619
- DATABASE GNPD [online] MINTEL; 25 March 2021 (2021-03-25), ANONYMOUS: "Oat and Chocolate Flavoured Protein Drink", XP055955364, retrieved from https://www.gnpd.com/sinatra/recordpage/8587373/ Database accession no. 8587373
- DATABASE GNPD [online] MINTEL; 31 March 2021 (2021-03-31), ANONYMOUS: "Original Oat Drink", XP055955362, retrieved from https://www.gnpd.com/sinatra/recordpage/8599359/ Database accession no. 8599359
- YANG YONGA ET AL: "FUNCTIONAL SPORTS FOOD BASED ON THE OAT GRAIN PROTEIN CONCENTRATE", SCIENCE EVOLUTION, 27 June 2017 (2017-06-27), pages 73 - 81, XP055955321, ISSN: 2500-4239, Retrieved from the Internet <URL:http://dx.doi.org/10.21603/2500-1418-2017-2-1-73-81> DOI: 10.21603/2500-1418-2017-2-1-73-81

## Description

### BACKGROUND OF THE INVENTION

The present invention relates generally to the fractionation of an oat base using combinations of microfiltration, ultrafiltration, nanofiltration, and reverse osmosis to prepare fractions of the oat base.

EP 0 619 950 A1 discloses a process for fractionating oats to obtain a transparent stable, soluble oat protein containing aqueous solution comprising preparing an aqueous slurry comprising water and an oat substrate, fractionating the oat substrate to obtain a translucent slurry comprising an insoluble solid fraction, an insoluble liquid fraction, a soluble oat protein fraction and a soluble carbohydrate fraction, and removing the insoluble liquid and solid fractions to obtain the aqueous oat protein containing solution.

### SUMMARY OF THE INVENTION

Consistent with this invention, a method for making an oat composition is disclosed herein, and the first method is as defined in claim 1.

A second method for making an oat composition is provided in another aspect, not forming part of this invention, and the second method can comprise (a) ultrafiltering an oat base to produce a UF permeate fraction and a UF retentate fraction, (b) microfiltering the UF retentate fraction to produce a MF permeate fraction and a MF retentate fraction, (c) ultrafiltering the MF permeate fraction to produce a second UF permeate fraction and a second UF retentate fraction, (d) concentrating the MF retentate fraction and/or the second UF permeate fraction to produce a concentrated fraction, (e) nanofiltering the UF permeate fraction and/or the second UF retentate fraction to produce a NF permeate fraction and a NF retentate fraction, and (f) combining the concentrated fraction, the NF permeate fraction, and optionally water to form the oat composition.

Both the foregoing summary and the following detailed description provide examples and are explanatory only. Accordingly, the foregoing summary and the following detailed description should not be considered to be restrictive. Further, features or variations can be provided in addition to those set forth herein. For example, certain aspects can be directed to various feature combinations and sub-combinations described in the detailed description.

### BRIEF DESCRIPTION OF THE FIGURES

The following figures form part of the present specification and are included to further demonstrate certain aspects of the present invention. The invention may be better understood by reference to these figures in combination with the detailed description and examples.
**FIG. 1** presents a schematic flow diagram of a first production process for making an oat composition from an oat base.
**FIG. 2** presents a schematic flow diagram of a second production process for making an oat composition from an oat base.

### DEFINITIONS

To define more clearly the terms used herein, the following definitions are provided. Unless otherwise indicated, the following definitions are applicable to this disclosure. If a term is used in this disclosure but is not specifically defined herein, the definition from the IUPAC Compendium of Chemical Terminology, 2^{nd} Ed (1997), can be applied, as long as that definition does not conflict with any other disclosure or definition applied herein, or render indefinite or non-enabled any claim to which that definition can be applied. To the extent that any definition or usage provided by any document incorporated herein by reference conflicts with the definition or usage provided herein, the definition or usage provided herein controls.

Herein, features of the subject matter are described such that, within particular aspects, a combination of different features can be envisioned. For each and every aspect and/or feature disclosed herein, all combinations that do not detrimentally affect the designs, compositions, processes, and/or methods described herein are contemplated with or without explicit description of the particular combination. Additionally, unless explicitly recited otherwise, any aspect and/or feature disclosed herein can be combined to describe inventive designs, compositions, processes, and/or methods consistent with the present invention.

In this disclosure, while compositions and processes are often described in terms of "comprising" various components or steps, the compositions and processes also can "consist essentially of" or "consist of" the various components or steps, unless stated otherwise. For example, an oat-based composition consistent with aspects of the present invention can comprise; alternatively, can consist essentially of; or alternatively, can consist of; a MF retentate fraction, a UF retentate fraction, and water.

The terms "a," "an," and "the" are intended to include plural alternatives, e.g., at least one, unless otherwise specified. For instance, the disclosure of "an ingredient" is meant to encompass one or mixtures or combinations of more than one ingredient, unless otherwise specified.

In the disclosed methods, the term "combining" encompasses the contacting of components in any order, in any manner, and for any length of time, unless otherwise specified. For example, the components can be combined by blending or mixing.

Several types of ranges are disclosed in the present invention. When a range of any type is disclosed or claimed, the intent is to disclose or claim individually each possible number that such a range could reasonably encompass, including end points of the range as well as any sub-ranges and combinations of sub-ranges encompassed therein. For example, the MF retentate fraction can have a total dietary fiber content from 0.2 to 6 wt. % in aspects of this invention. By a disclosure that the fiber content is from 0.2 to 6 wt. %, the intent is to recite that the fiber content can be any amount in the range and, for example, can include any range or combination of ranges from 0.2 to 6 wt. %, such as from 0.2 to 4 wt. %, from 0.2 to 2 wt. %, or from 0.2 to 1 wt. %, and so forth. Likewise, all other ranges disclosed herein should be interpreted in a manner similar to this example.

In general, an amount, size, formulation, parameter, range, or other quantity or characteristic is "about" or "approximate" whether or not expressly stated to be such. Whether or not modified by the term "about" or "approximately," the claims include equivalents to the quantities or characteristics.

### DETAILED DESCRIPTION OF THE INVENTION

Oats are a popular grain among health-conscious consumers. Indeed, segments of the population that regularly consume oatmeal have a lower body mass index (BMI) than non-consumers (Oatmeal consumption is associated with better diet quality and lower body mass index in adults: the National Health and Nutrition Examination Survey (NHANES), 2001-2010, Nutr. Res. 2015 Dec, 35(12), 1052-9). Additionally, consumption of two servings of whole oats per day is associated with a lowering of overall and LDL profiles due to the presence of soluble fibers, in particular β-glucan.

Plant-based beverages - such as oat-based beverages - are gaining popularity, due in part to perceived health benefits and reduced environmental impact. Nutritionally speaking however, these products derive a large portion of their calories from endogenous as well as added carbohydrates, primarily sugars. Diets high in carbohydrates have been found to increase triglyceride levels. Additionally, these products have relatively low protein content and rely on the addition of other sources of fat to contribute positive sensory and organoleptic attributes.

An objective of the present invention is a continuous method for fractionating an oat base preparation, and more specifically, a method that utilizes multiple polymeric membrane techniques to customize compositions from a liquid oat base. The oat base preparation may originate from various pretreatment process steps.

Herein, a liquid oat base is subjected to a series of filtration steps utilizing microfiltration, ultrafiltration, and/or nanofiltration, thereby resulting in product fractions that are enriched in lipids, carbohydrates/sugars, and protein based on molecular weight and solubility of the individual components. Particular product fractions subsequently can be blended or combined in various proportions to achieve a desired oat-based beverage composition. Other ingredients also can be added to form the beverage composition, such as flavorings, stabilizers, fats, vitamins, minerals, and the like.

Beneficially, it is believed that the disclosed methods can minimize or eliminate the use of external sources of fat, while concurrently resulting in an oat-based composition with a customizable enrichment of protein and an advantageous reduction of sugars and other non-fiber carbohydrates. Moreover, it is believed that the disclosed methods also can concentrate protein from the starting oat base material, while minimizing starches and carbohydrates.

### METHODS OF MAKING OAT COMPOSITIONS

In accordance with this invention, a method for making an oat composition comprises steps (i), (ii) and (iii) as defined in claim 1. In accordance with another aspect, not forming part of this invention, a second method for making an oat composition can comprise (or consist essentially of, or consist of) (a) ultrafiltering an oat base to produce a UF permeate fraction and a UF retentate fraction, (b) microfiltering the UF retentate fraction to produce a MF permeate fraction and a MF retentate fraction, (c) ultrafiltering the MF permeate fraction to produce a second UF permeate fraction and a second UF retentate fraction, (d) concentrating the MF retentate fraction and/or the second UF permeate fraction to produce a concentrated fraction, (e) nanofiltering the UF permeate fraction and/or the second UF retentate fraction to produce a NF permeate fraction and a NF retentate fraction, and (f) combining the concentrated fraction, the NF permeate fraction, and optionally water to form the oat composition.

Generally, the features of the method of the invention and the second method not forming part of the invention (e.g., the characteristics of the oat base, the characteristics of the oat composition, the ultrafiltering step(s) and the resultant UF permeate fraction and UF retentate fraction, the nanofiltering step(s) and the resultant NF permeate fraction and NF retentate fraction, and the microfiltering step and the resultant MF permeate fraction and MF retentate fraction, among others) are independently described herein and these features can be combined in any combination to further describe the disclosed methods. Moreover, other process steps can be conducted before, during, and/or after any of the steps listed in the disclosed methods, unless stated otherwise. Additionally, any oat compositions (e.g., oat-based beverages, ready for consumption) produced in accordance with any of the disclosed methods are within the scope of this disclosure and are encompassed herein.

Filtration technologies (e.g., microfiltration, ultrafiltration, nanofiltration, etc.) can separate or concentrate components in mixtures by passing the mixture through a membrane system (or selective barrier) under suitable conditions (e.g., pressure). The concentration or separation can be, therefore, based on molecular size. The stream that is retained by the membrane is called the retentate (or concentrate). The stream that passes through the pores of the membrane is called the permeate. Referring now to the first method for making an oat composition, this method can comprise (or consist essentially of, or consist of) (i) microfiltering an oat base to produce a MF permeate fraction and a MF retentate fraction, (ii) ultrafiltering the MF permeate fraction to produce a UF permeate fraction and a UF retentate fraction, and (iii) combining the MF retentate fraction, the UF retentate fraction, and optionally water to form the oat composition.

The oat base in step (i) can have any suitable composition. While not limited thereto, the oat base can have a solids content from 1 to 12 wt. % solids, such as from 3 to 9 wt. % solids, or from 5 to 7 wt. % solids. Typical protein contents of the oat base include from 0.1 to 4 wt. % protein, from 0.1 to 2.5 wt. % protein, or from 0.2 to 1.5 wt. % protein, and the like. The oat base can have any suitable fat content, encompassing fat-free and low-fat oat bases. Thus, ranges of fat content for the oat base often include from 0 to 5 wt. % fat, from 0 to 3.5 wt. % fat, or from 0 to 2 wt. % fat.

Based on solids, the oat base often can contain from 40 to wt. % starch and/or starch by-products, although not limited thereto. In some aspects, the oat base can contain, based on solids, from 45-75 wt. % starch and/or starch by-products, or from 50 to 70 wt. % starch and/or starch by-products.

The total dietary fiber content of the oat base ranges from 0.1 to 3 wt. %, from 0.1 to 2 wt. %, or from 0.1 to 1 wt. %. Of the total dietary fiber in the oat base, the soluble dietary fiber content is often the majority of the total fiber, and can be from 40 to 100 wt. % of the total dietary fiber; alternatively, from 50 to 100 wt. % of the total dietary fiber; or alternatively, from 60 to 100 wt. % of the total dietary fiber. Thus, in some aspects, all or substantially all of the total dietary fiber in the oat base can be soluble dietary fiber. Of the soluble dietary fiber present in the oat base, the low molecular weight soluble dietary fiber content can range from 0 to 100 wt. %, but more often, the low molecular weight soluble dietary fiber content ranges from 10 to 100 wt. %, or from 50 to 100 wt. %, based on the soluble dietary fiber.

Prior to use in the method for making an oat composition, the method can further comprise a step of enzyme pretreating the oat base prior to step (i). Additionally or alternatively, the method can further comprise a step of milling an oat product and adding water to form the oat base. For instance, the oat product, water, and an acid or a base can be combined to form the oat base. In an aspect, it can be beneficial for the pH of the oat base, prior to microfiltering, to be greater than 7, such as at least 8, at least 8.5, or at least 9. While not wishing to be bound by theory, it is believed the microfiltering the oat base under the high pH conditions results better protein separation and the recovery of more protein from the oat base. The pH range is as claimed from 8 to 11.

While not limited thereto, such pH ranges for the oat base can be achieved by combining the oat product, water, and a suitable food-grade base, such as sodium hydroxide, potassium hydroxide, calcium hydroxide, sodium carbonate, or potassium carbonate, and the like, or combinations thereof. Any one or a combination of these techniques (e.g., enzyme pretreating, milling, pH adjustment) can be used prior to the first filtration/membrane step in order to improve protein separation and yield, or to reduce membrane fouling, or to improve operational efficiency, or any combination thereof.

In step (i), the oat base is microfiltered to produce a MF permeate fraction and a MF retentate fraction. Microfiltering can be conducted using microfiltration membranes with relatively large pore sizes that typically are in the 0.1 to 10 µm range, for example, pore sizes in a range from 0.2 to 2 µm, or from 0.1 to 0.2 µm. In some aspects, the step of microfiltering utilizes a membrane system having pore sizes in a range from 0.1 to 0.2 µm, with operating pressures typically less than 5.17 bar, e.g 0.68-3.10 bar (75 psig, e.g. 10-45 psig) and operating temperatures ranging from 5 to 60 °C (or from 35 to 55 °C), although not limited thereto.

The MF retentate fraction after the microfiltering step has a solids content from 3 to 20 wt. % solids, and in some instances, from 4 to 18 wt. % solids, or from 5 to 12 wt. % solids. The protein content of the MF retentate fraction is from 0.1 to 4 wt %. The fat content in the MF retentate is from about 0 to 5 wt%. The total dietary fibre content is from 0.1 to 3 wt%.

In step (ii), the MF permeate fraction (some or all) can be ultrafiltered using ultrafiltration membranes with pore sizes that typically are in the 0.01 to 0.1 µm range. In certain industries, such as the dairy industry, the ultrafiltration membranes often are identified based on molecular weight cut-off (MWCO), rather than pore size. The molecular weight cut-off for ultrafiltration membranes can vary from 1000-100,000 Daltons, or from 10,000-100,000 Daltons. For instance, the MF permeate fraction can be ultrafiltered using a polymeric membrane system (ceramic membranes also can be employed). The polymeric membrane system (or ceramic membrane system) can be configured with pore sizes such that the materials having molecular weights greater than 1,000 Daltons, greater than 5,000 Daltons, or greater than 10,000 Daltons, are retained, while lower molecular weight species pass through. For instance, UF membrane systems with a molecular weight cut-off of 10,000 Daltons can be used in the dairy industry for separating and concentrating milk proteins. In some aspects, the step of ultrafiltering utilizes a membrane system having pore sizes in a range from 0.01 to 0.1 µm, and operating pressures typically in the 1.03-10.3 bar (15-150 psig range), or the 3.10-10.3 bar (45-150 psig range). While not being limited thereto, the ultrafiltration step is conducted at a temperature in a range from 3 to 15 °C. Ultrafiltering at lower temperatures generally results in superior product quality and organoleptic properties as compared to higher temperature ultrafiltration (e.g., ~25-50 °C).

In an aspect of this invention, ultrafiltering the MF permeate fraction (some or all) in step (ii) can comprise diafiltering the MF permeate fraction through the ultrafiltration membrane. For instance, diafiltering the MF permeate fraction can comprise diafiltering a mixture of the MF permeate fraction and water, and this mixture can utilize any suitable proportions or relative amounts of the MF permeate fraction and water.

Prior to ultrafiltering, the pH of the MF permeate fraction can be adjusted, often to within a range from 5 to 8.5, and more often, to within a range from 5 to 8; alternatively, from 5 to 7.5; alternatively, from 5.5 to 8.5; alternatively, from 5.5 to 8; alternatively, from 6 to 8.5; alternatively, from 6 to 8; or alternatively, from 6 to 7.5. If the pH of the oat base prior to microfiltering is relatively high, the pH can be adjusted downward prior to ultrafiltering with any suitable food-grade acid, illustrative examples of which can include citric acid, phosphoric acid, sulfuric acid, hydrochloric acid, acetic acid, or lactic acid, and the like, or combinations thereof.

The UF retentate fraction after the ultrafiltering step often has a solids content from 1 to 12 wt. % solids, and in some instances, from 3 to 9 wt. % solids, or from 5 to 7 wt. % solids. The protein content of the UF retentate fraction can vary significantly depending on the oat base and the microfiltering step (e.g., particle size and solubility), but generally, protein contents from 0.05 to 7 wt. % protein, 0.05 to 4 wt. % protein, from 0.05 to 1 wt. % protein, from 0.05 to 0.5 wt. % protein, from 0.1 to 7 wt. % protein, or from 0.5 to 7 wt. % protein, are typical. Stated another way, the protein content of the UF retentate fraction - based on solids - typically can range from 30 to 75 wt. % protein in one aspect, from 35 to 70 wt. % protein in another aspect, from 30 to 65 wt. % protein in another aspect, from 40 to 60 wt. % protein in yet another aspect, and from 45 to 55 wt. % protein in still another aspect.

The UF retentate has a relatively low fat content, such as from 0 to 1 wt. %, from 0 to 0.5 wt. %, or from 0 to 0.2 wt. %. The total dietary fiber content of the UF retentate can range from 0.1 to 3 wt. % in one aspect, from 0.1 to 2 wt. % in another aspect, and from 0.1 to 1 wt. % in yet another aspect, although not limited thereto.

Step (iii) of the method of making an oat composition comprises combining the MF retentate fraction, the UF retentate fraction, and optionally water to form the oat composition. Any combinations of these components can be mixed or combined, in any suitable relative proportions, to form the oat composition. In some aspects, at least the MF retentate fraction and the UF retentate fraction can be combined to form the oat composition, while in other aspects, at least the MF retentate fraction, the UF retentate fraction, and water can be combined to form the oat composition.

Moreover, an ingredient also can be added in the combining step. Non-limiting examples of suitable ingredients can include a sugar/sweetener, a flavorant, a preservative (e.g., to prevent yeast or mold growth), a stabilizer, an emulsifier, a prebiotic substance, a probiotic bacteria, a vitamin, a mineral, an omega 3 fatty acid, a phyto-sterol, an antioxidant, or a colorant, and the like, as well as any mixture or combination thereof.

Optionally, the method for making the oat composition can further comprise a step of concentrating the MF retentate fraction (some or all) to produce a concentrated MF retentate fraction, or the method can further comprise a step of concentrating the UF retentate fraction (some or all) to produce a concentrated UF retentate fraction, or the method can further comprise both the steps of concentrating the MF retentate fraction (some or all) to produce the concentrated MF retentate fraction and concentrating the UF retentate fraction (some or all) to produce the concentrated UF retentate fraction. Thus, step (iii) of the method of making an oat composition can comprise combining the MF retentate fraction (concentrated or un-concentrated), the UF retentate fraction (concentrated or un-concentrated), and optionally water to form the oat composition. Any combinations of these components can be mixed or combined, in any suitable relative proportions, to form the oat composition. In some aspects, at least the MF retentate fraction and the UF retentate fraction (wherein at least one has been concentrated) can be combined to form the oat composition, while in other aspects, at least the MF retentate fraction and the UF retentate fraction (wherein at least one has been concentrated) and water can be combined to form the oat composition. As above, any suitable ingredient or combination of ingredients can be added in the combining step.

Independently, each of these concentrating steps (e.g., to increase solids content) can comprise reverse osmosis, forward osmosis, or nanofiltration (e.g., NF retentate of the UF retentate, which can have higher solids and less minerals than the UF retentate). Reverse osmosis is a fine filtration process or concentration process in which substantially all the remaining components are retained (RO retentate), and only water (RO permeate) passes through. Often, reverse osmosis membrane systems have a molecular weight cutoff of much less than 100 Da and, therefore, components other than water are concentrated in the reverse osmosis process (e.g., minerals). Generally, reverse osmosis comprises a membrane system having pore sizes of less than or equal to 0.001 µm. Operating pressures typically are in the 31.02-103.42 bar (450-1500 psig), or 31.02-41.36 bar (450-600 psig) range. Temperatures ranging from 5 to 45 °C, or from 15 to 45 °C, often can used.

Optionally, the method for making the oat composition can further comprise a step of ultrafiltering the MF retentate fraction (some or all) to produce a second UF permeate fraction and a second UF retentate fraction. This ultrafiltering step can be performed in the same manner as described above for step (ii). For instance, ultrafiltering the MF retentate fraction can comprise diafiltering the MF retentate fraction through the ultrafiltration membrane, and a mixture of the MF retentate fraction and water can be used at any suitable proportions or relative amounts of the MF retentate fraction and water.

Also optionally, the method for making the oat composition can further comprise a step of nanofiltering the UF permeate fraction (some or all) and/or the second UF retentate fraction (some or all) to produce a NF permeate fraction and a NF retentate fraction. Nanofiltration typically uses membrane elements that retain particles with molecular weights above approximately 100-300 Da. Nanofiltration is a pressure driven process in which the liquid is forced through a membrane under pressure, and materials having a molecular weight greater than the specified cut-off are retained, while smaller particles pass though the membrane pores. Like ultrafiltration, nanofiltration can simultaneously perform both concentration and separation. Nanofiltering can be conducted using nanofiltration membranes with pore sizes that typically are in the 0.001 to 0.01 µm range, for example, pore sizes in a range from 0.001 to 0.008 µm. In some aspects, the step of nanofiltration utilizes a membrane system having pore sizes in a range from 0.001 to 0.01 µm, with operating pressures typically in the 10.34-31.02 bar (150-450 psig) range, and operating temperatures ranging from 10 to 60 °C (or from 15 to 45 °C), although not limited thereto.

Therefore, in some instances, step (iii) of the method of making an oat composition can comprise combining the MF retentate fraction, the UF retentate fraction, the NF retentate fraction, and optionally water to form the oat composition. Any combinations of these components can be mixed or combined, in any suitable relative proportions, to form the oat composition. As above, any suitable ingredient or combination of ingredients can be added during the combining step.

Moreover, the method also can further comprise a step of heat treating the oat composition. In one aspect, the step of heat treating can comprise pasteurizing at a temperature in a range from 80 °C to 95 °C for a time period in a range from 2 to 15 minutes. In another aspect, the step of heat treating can comprise UHT sterilization at a temperature in a range from 135 °C to 145 °C for a time period in a range from 1 to 10 seconds. In yet another aspect, the step of heat treating can comprise UHT sterilization at a temperature in a range from 148 °C to 165 °C for a time period in a range from 0 to 1 sec (e.g., 0.05 to 1 sec, 0.05 to 0.5 sec). Other appropriate pasteurization or sterilization temperature and time conditions are readily apparent from this disclosure. Further, this invention is not limited by the method or equipment used for performing the pasteurization/sterilization process - any suitable technique and apparatus can be employed, whether operated batchwise or continuously.

For instance, typical UHT sterilization techniques include indirect steam heating, direct steam injection, direct steam infusion, and the like. For indirect steam heating, the oat composition is not contacted directly with the heat source or heating medium, e.g., like a heat exchanger. Due to the heat transfer limitations, indirect heating requires a longer time to reach sterilization temperatures. Beneficially, in aspects of this invention, the oat composition is heat treated using direct UHT sterilization. In direct steam injection, high temperature steam is injected into the pipe or other vessel containing the oat composition, thus rapidly sterilizing the oat composition. Direct steam injection generally is performed continuously - a continuous flow of the oat composition is combined with a continuous injection of steam. In direct steam infusion, the oat composition is sprayed into a chamber containing steam, thus rapidly and uniformly sterilizing the oat composition. Like direct steam injection, direct steam infusion generally is performed continuously. After the heat treatment step, the oat composition can be cooled to any suitable temperature, such as in a range from 5 °C to 40 °C, or from 10 °C to 30 °C.

In some aspects of this invention, the method for making an oat composition, after a heat treatment step, can further comprise a step of packaging (aseptically or otherwise) the oat composition in any suitable container and under any suitable conditions. Thus, after combining the various components and ingredients as described herein to form the oat composition, the oat composition can be packaged under aseptic conditions (or non-aseptic conditions) in a container. Any suitable container can be used, such as might be used for the distribution and/or sale of oat-based products or beverages in a retail outlet. Illustrative and non-limiting examples of typical containers include a cup, a bottle, a bag, or a pouch, and the like. The container can be made from any suitable material, such as glass, metal, plastics, and the like, as well as combinations thereof.

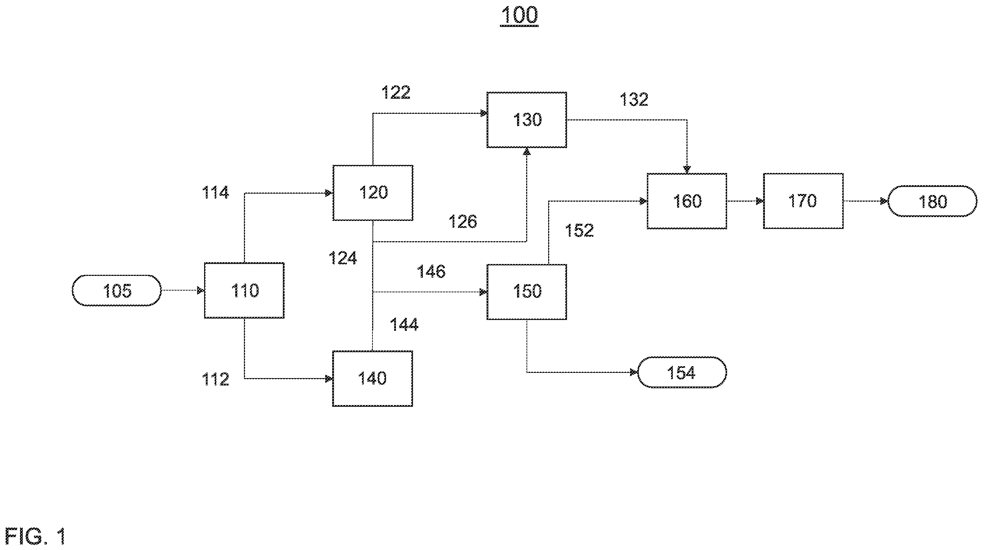

An illustrative and non-limiting example of a suitable separations process 100 consistent with aspects of the method of this invention is shown in FIG. 1. Initially, an oat base 105 is subjected to microfiltration 110 to form a MF permeate fraction 114 and a MF retentate fraction 112. The MF permeate fraction 114 is subjected to ultrafiltration 120 to produce a UF permeate fraction 124 and a UF retentate fraction 122, while the MF retentate fraction 112 is subjected to ultrafiltration 140 to produce a second UF retentate fraction 144. The UF retentate fraction 122 (and optionally the UF permeate fraction 124, or the second UF retentate fraction 144, or a mixture thereof, thru feed line 126) is concentrated 130 by reverse osmosis or forward osmosis or nanofiltration to form a concentrated UF retentate fraction 132. The UF permeate fraction 124, or the second UF retentate fraction 144, or a mixture thereof, thru feed line 146 is subjected to nanofiltration 150 to form a NF retentate fraction 152 and a NF permeate fraction 154. In FIG. 1, at least the concentrated UF retentate fraction 132 and the NF retentate fraction 152 are combined 160 to form the oat composition. Subsequently, the oat composition is heat treated 170 and then cooled and packaged 180. While not shown in FIG. 1, the second UF retentate fraction 144, without further processing, can be combined 160 with the other feed streams to form the oat composition.

Referring now to a further method, not part of the invention, for making an oat composition, the second method can comprise (a) ultrafiltering an oat base to produce a UF permeate fraction and a UF retentate fraction, (b) microfiltering the UF retentate fraction to produce a MF permeate fraction and a MF retentate fraction, (c) ultrafiltering the MF permeate fraction to produce a second UF permeate fraction and a second UF retentate fraction, (d) concentrating the MF retentate fraction and/or the second UF permeate fraction to produce a concentrated fraction, (e) nanofiltering the UF permeate fraction and/or the second UF retentate fraction to produce a NF permeate fraction and a NF retentate fraction, and (f) combining the concentrated fraction, the NF permeate fraction, and optionally water to form the oat composition. The oat base in the second method can be the same as in the first method, and the steps (ultrafiltering, microfiltering, etc.) in the second method can be performed similarly to the corresponding steps (ultrafiltering, microfiltering) in the first method described herein.

For instance, the step of ultrafiltering the MF permeate fraction (some or all) in step (c) can comprises diafiltering the MF permeate fraction (e.g., a mixture of the MF permeate fraction and water) through an ultrafiltration membrane. Additionally, the concentrating step (d) can utilize reverse osmosis or forward osmosis.

Step (f) of the second method of making an oat composition can comprise combining the concentrated fraction, the NF permeate fraction, and optionally water to form the oat composition. Any combinations of these components can be mixed or combined, in any suitable relative proportions, to form the oat composition. As above, any suitable ingredient or combination of ingredients can be added during the combining step.

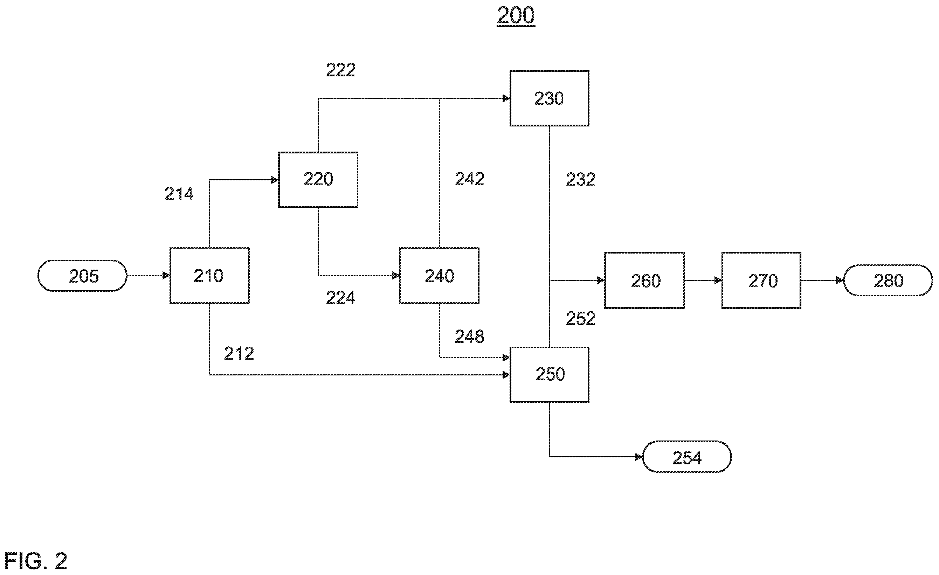

An illustrative and non-limiting example of a suitable separations process 200 consistent with aspects of the second method not forming part of this invention is shown in FIG. 2. Initially, an oat base 205 is subjected to ultrafiltration 210 to form a UF permeate fraction 212 and a UF retentate fraction 214. The UF retentate fraction 214 is subjected to microfiltration 220 to produce a MF permeate fraction 224 and a MF retentate fraction 222, and the MF permeate fraction 224 is subjected to ultrafiltration 240 to form a second UF permeate fraction 242 and a second UF retentate fraction 248. The MF retentate fraction 222 and/or the second UF permeate fraction 242 is/are concentrated 230 by reverse osmosis or forward osmosis to form a concentrated fraction 232. The UF permeate fraction 212 and/or the second UF retentate fraction 248 is/are subjected to nanofiltration 250 to form a NF permeate fraction 252 and a NF retentate fraction 254. In FIG. 2, at least the concentrated fraction 232 and the NF permeate fraction 252 are combined 260 to form the oat composition. Subsequently, the oat composition is heat treated 270 and then cooled and packaged 280.

### EXAMPLES

Total solids (wt. %) were determined in accordance with procedure SMEDP 15.10 C by CEM Turbo Solids and Moisture Analyzer (CEM Corporation, Matthews, North Carolina). The calcium content was determined via Inductively Coupled Plasma Optical Emission Spectrophotometry against a set of ISO certified standards. Protein content and fat content were determined by AOAC (Association of Official Analytical Chemists) methods.

Total dietary fiber, soluble dietary fiber, low molecular weight dietary fiber, and high molecular weight dietary fiber were determined by HPLC per AOAC 2011.25 and 2009.01 methods.

### EXAMPLE 1

Example 1 was conducted by using portions of the process scheme shown in **FIG. 1****,** and **Table I** summarizes the solids, calcium, fat, total dietary fiber (soluble fiber, low molecular weight, and high molecular weight), and protein contents of the relevant process streams in **FIG. 1****.** An oat base having the composition shown in **Table I** and a pH of ~6-6.8 was adjusted to a pH of 8-8.5 with sodium hydroxide and then was microfiltered to produce a MF permeate fraction and a MF retentate fraction, and the MF permeate fraction was adjusted to a pH of 7-7.5 with hydrochloric acid and then ultrafiltered to produce a UF permeate fraction and a UF retentate fraction. An oat composition (an oat-based beverage) was prepared by mixing the MF retentate fraction and the UF retentate fraction at a weight ratio of approximately 50:50. Unexpectedly, the MF retentate fraction (without further processing) exhibited mouthfeel (smooth and creamy) similar to dairy milk and substantially improved over traditional plant-based beverages (chalky and gritty). Moreover, there was a significant reduction in off-flavors in the MF retentate as compared to the oat base prior to microfiltering.

As shown in **Table I,** after the oat base was subjected to microfiltration, the MF retentate fraction contained a high proportion of lipids, which can be further concentrated, if desired (e.g., ultrafiltration or reverse osmosis). The MF permeate fraction was subjected to diafiltration using an ultrafiltration membrane, and the UF retentate fraction contained a higher proportion of proteins and β-glucan, with the UF permeate fraction containing greater mass of carbohydrates, sugars, and minerals. Optionally, the UF permeate fraction can be further subjected to nanofiltration, and the resultant mineral-rich NF permeate fraction can be incorporated into an oat composition.

### EXAMPLE 2

Example 2 was performed in substantially the same manner as Example 1, and the relevant process streams and their respective compositions are summarized in **Table II.** An oat base having the composition shown in **Table II** and a pH of ~6-6.8 was adjusted to a pH of 8-8.5 with sodium hydroxide and then was microfiltered to produce a MF permeate fraction and a MF retentate fraction, and the MF permeate fraction was adjusted to a pH of 7-7.5 with hydrochloric acid and then ultrafiltered to produce a UF permeate fraction and a UF retentate fraction. An oat composition (an oat-based beverage) was prepared by mixing approximately 49.46 wt. % MF retentate fraction, 49.46 wt. % UF retentate fraction, 0.1 wt. % salt, and 0.98 wt. % sucrose, and the oat composition had the overall solids, fat, and protein contents shown in **Table II**. This final oat composition, beneficially, exhibited a neutral flavor and mouthfeel without the chalky texture typically found in traditional plant-based beverages. The oat base in Example 2 was protease-treated prior to pH adjustment and microfiltration, resulting in lower molecular weight species that were not retained on the MF and UF membranes, thus higher protein contents in the permeate streams as compared to Example 1.

**Table I**

| Example 1 | Total Solids (wt. %) | Calcium (wt. %) | Fat (wt. %) | HMW Soluble Dietary Fiber (wt. %) | LMW Soluble Dietary Fiber (wt. %) | Soluble Dietary Fiber (wt. %) | Total Dietary Fiber (wt. %) | Protein (wt. %) |
|---|---|---|---|---|---|---|---|---|
| Oat Base | 5.4 | 0.005 | 0.24 | <0.10 | 0.32 | 0.32 | 0.32 | 0.43 |
| MF Retentate | 8.5 | 0.010 | 1.12 | 0.17 | 0.39 | 0.56 | 0.56 | 1.34 |
| MF Permeate | 4.0 | 0.0031 | 0.05 | <0.10 | 0.33 | 0.33 | 0.33 | 0.06 |
| UF Retentate | 5.9 | 0.011 | 0.02 | <0.10 | 0.4 | 0.4 | 0.4 | 0.13 |
| UF Permeate | 2.2 | 0.0032 | 0.02 | <0.10 | 0.2 | 0.2 | 0.2 | 0.03 |

**Table II**

| Example 2 | Total Solids (wt. %) | Fat (wt. %) | Total Dietary Fiber (wt. %) | Protein (wt. %) |
|---|---|---|---|---|
| Oat Base | 7.1 | 0.50 | 0.59 | 0.95 |
| MF Retentate | 15.2 | 1.41 | 1.0 | 2.10 |
| MF Permeate | 3.0 | 0.02 | -- | 0.28 |
| UF Retentate | 8.3 | 0.02 | 0.54 | 0.56 |
| UF Permeate | 1.0 | 0.03 | -- | 0.09 |
| Oat Composition | 12.6 | 0.71 | -- | 1.32 |

## Claims

1. A method for making an oat composition, the method comprising:
(i) microfiltering an oat base to produce a MF permeate fraction and a MF retentate fraction, wherein the oat base is **characterized by**:
a protein content from 0.1 to 4 wt. %;
a fat content from about 0 to 5 wt. %;
a total dietary fiber content from 0.1 to 3 wt. %;
a solids content from 1 to 12 wt%;
a pH of from 8 to 11; and
wherein the MF retentate fraction is **characterized by** a solids content from 3 to 20 wt%;
(ii) ultrafiltering the MF permeate fraction at a temperature in a range from 3 to 15°C to produce a UF permeate fraction and a UF retentate fraction;
and
(iii) combining the MF retentate fraction, the UF retentate fraction, and optionally water to form the oat composition.

2. The method of claim 1, wherein the oat base is **characterized by** a solids content from 3 to 9 wt. %, or from 5 to 7 wt. %.

3. The method of claim 1 or 2, wherein the oat base is **characterized by**:
a protein content from 0.1 to 2.5 wt. % or from 0.2 to 1.5 wt. %;
a fat content from 0 to 3.5 wt. % or from 0 to 2 wt. %; and
a total dietary fiber content from 0.1 to 2 wt. % or from 0.1 to 1 wt. %.

4. The method of any one of claims 1-3, wherein the oat base is **characterized by**:
a soluble dietary fiber content from 40 to 100 wt. %, from 50 to 100 wt. %, or from 60 to 100 wt. %, based on the total dietary fiber; and
a low molecular weight soluble dietary fiber content from 0 to 100 wt. %, from 10 to 100 wt. %, or from 50 to 100 wt. %, based on the soluble dietary fiber.

5. The method of any one of claims 1-4, wherein the MF retentate fraction is **characterized by**:
a solids content from 4 to 18 wt. %, or from 5 to 12 wt. %;
a protein content from 0.5 to 10 wt. %, from 0.5 to 6 wt. %, or from 0.8 to 5 wt. %;
a fat content from 0 to 10 wt. %, from 0 to 7 wt. %, or from 0 to 4 wt. %;
and
a total dietary fiber content from 0.2 to 6 wt. %, from 0.2 to 4 wt. %, or from 0.2 to 2 wt. %.

6. The method of any one of claims 1-5, wherein the UF retentate fraction is **characterized by** a solids content from 1 to 12 wt. %, from 3 to 9 wt. %, or from 5 to 7 wt. %.

7. The method of any one of claims 1-6, wherein the UF retentate fraction is **characterized by**:
a protein content from 0.05 to 7 wt. %, 0.05 to 4 wt. %, from 0.05 to 1 wt. %, from 0.05 to 0.5 wt. %, from 0.1 to 7 wt. %, or from 0.5 to 7 wt. %;
a fat content from 0 to 1 wt. %, from 0 to 0.5 wt. %, or from 0 to 0.2 wt. %; and
a total dietary fiber content from 0.1 to 3 wt. %, from 0.1 to 2 wt. %, or from 0.1 to 1 wt. %.

8. The method of any one of claims 1-7, wherein ultrafiltering the MF permeate fraction in step (ii) comprises diafiltering the MF permeate fraction through an ultrafiltration membrane.

9. The method of any one of claims 1-8, further comprising:
concentrating the MF retentate fraction to produce a concentrated MF retentate fraction; and/or
concentrating the UF retentate fraction to produce a concentrated UF retentate fraction.

10. The method of claim 9, wherein concentrating comprises reverse osmosis, forward osmosis, or nanofiltration.

11. The method of claim 9 or 10, wherein step (iii) comprises combining the concentrated MF retentate fraction, the concentrated UF retentate fraction, and optionally water to form the oat composition.

12. The method of any one of claims 1-11, further comprising ultrafiltering the MF retentate fraction to produce a second UF permeate fraction and a second UF retentate fraction.

13. The method of any one of claims 1-12, further comprising nanofiltering the UF permeate fraction and/or the second UF retentate fraction to produce a NF permeate fraction and a NF retentate fraction.

14. The method of claim 13, wherein step (iii) comprises combining the MF retentate fraction, the UF retentate fraction, the NF retentate fraction, and
optionally water to form the oat composition.

15. The method of any one of claims 1-14, wherein:
a pH of the oat base in step (i) prior to microfiltering is from 8 to 11, from 8.5 to 11, from 9 to 11, from 8 to 10, from 8.5 to 10, or from 9 to 10; and
a pH of the MF permeate fraction in step (ii) prior to ultrafiltering is from 5 to 8.5, from 5 to 8, from 5 to 7.5, from 5.5 to 8.5, from 5.5 to 8, from 6 to 8.5, from 6 to 8, or from 6 to 7.5.

16. The method of any one of claims 1-15, wherein:
the combining step further comprises adding an ingredient, wherein the ingredient comprises a sugar/sweetener, a flavorant, a preservative, a stabilizer, an emulsifier, a prebiotic substance, a probiotic bacteria, a vitamin, a mineral, an omega 3 fatty acid, a phyto-sterol, an antioxidant, a colorant, or any combination thereof; and
the method further comprises a step of heat treating the oat composition and/or a step of packaging the oat composition in a container.

17. The method of any one of claims 1-16, wherein:
the method further comprises a step of enzyme pretreating the oat base prior to step (i); and/or
the method further comprises a step of milling an oat product and adding water and optionally an acid or a base to form the oat base.

## Patentansprüche

1. Verfahren zur Herstellung einer Haferzusammensetzung, wobei das Verfahren umfasst:
(i) Mikrofiltrieren einer Haferbasis, um eine MF-Permeatfraktion und eine MF-Retentatfraktion herzustellen, wobei die Haferbasis **gekennzeichnet ist durch**:
einen Proteingehalt von 0,1 bis 4 Gew.-%;
einen Fettgehalt von etwa 0 bis 5 Gew.-%;
einen Gesamtballaststoffgehalt von 0,1 bis 3 Gew.-%;
einen Feststoffgehalt von 1 bis 12 Gew.-%;
einen pH-Wert von 8 und 11; und
wobei die MF-Retentatfraktion **durch** einen einen Feststoffgehalt von 3 bis 20 Gew.-% gekennzeichnet ist;
(ii) Ultrafiltrieren der MF-Permeatfraktion bei einer Temperatur im Bereich von 3 bis 15°C, um eine UF-Permeatfraktion und eine UF-Retentatfraktion herzustellen; und
(iii) Kombinieren der MF-Retentatfraktion, der UF-Retentatfraktion und gegebenenfalls Wasser, um die Haferzusammensetzung zu bilden.

2. Verfahren von Anspruch 1, wobei die Haferbasis durch einen Feststoffgehalt von 3 bis 9 Gew.-% oder von 5 bis 7 Gew.-% gekennzeichnet ist.

3. Verfahren von Anspruch 1 oder 2, wobei die Haferbasis **gekennzeichnet ist durch**:
einen Proteingehalt von 0,1 bis 2,5 Gew.-% oder von 0,2 bis 1,5 Gew.- %;
einen Fettgehalt von 0 bis 3,5 Gew.-% oder von 0 bis 2 Gew.-%; und
einen Gesamtballaststoffgehalt von 0,1 bis 2 Gew.-% oder von 0,1 bis 1 Gew.-%.

4. Verfahren von irgendeinem der Ansprüche 1-3, wobei die Haferbasis **gekennzeichnet ist durch**:
einen Gehalt an löslichen Ballaststoffen von 40 bis 100 Gew.-%, von 50 bis 100 Gew.-% oder von 60 bis 100 Gew.-%, bezogen auf die Gesamtballaststoffe; und
einen Gehalt an löslichen Ballaststoffen mit niedrigem Molekulargewicht von 0 bis 100 Gew.-%, von 10 bis 100 Gew.-% oder von 50 bis 100 Gew.-%, bezogen auf die löslichen Ballaststoffe.

5. Verfahren von irgendeinem der Ansprüche 1-4, wobei die MF-Retentatfraktion **gekennzeichnet ist durch**:
einen Feststoffgehalt von 4 bis 18 Gew.-% oder von 5 bis 12 Gew.-%;
einen Proteingehalt von 0,5 bis 10 Gew.-%, von 0,5 bis 6 Gew.-% oder von 0,8 bis 5 Gew.-%;
einen Fettgehalt von 0 bis 10 Gew.-%, von 0 bis 7 Gew.-% oder von 0 bis 4 Gew.-%; und
einen Gesamtgehalt an Ballaststoffen von 0,2 bis 6 Gew.-%, von 0,2 bis 4 Gew.-% oder von 0,2 bis 2 Gew.-%.

6. Verfahren von irgendeinem der Ansprüche 1-5, wobei die UF-Retentatfraktion durch einen Feststoffgehalt von 1 bis 12 Gew.-%, von 3 bis 9 Gew.-% oder von 5 bis 7 Gew.-% gekennzeichnet ist.

7. Verfahren von irgendeinem der Ansprüche 1-6, wobei die UF-Retentatfraktion **gekennzeichnet ist durch**:
einen Proteingehalt von 0,05 bis 7 Gew.-%, 0,05 bis 4 Gew.-%, von 0,05 bis 1 Gew.-%, von 0,05 bis 0,5 Gew.-%, von 0,1 bis 7 Gew.-%, oder von 0,5 bis 7 Gew.-%;
einen Fettgehalt von 0 bis 1 Gew.-%, von 0 bis 0,5 Gew.-% oder von 0 bis 0,2 Gew.-%; und
einen Gesamtgehalt an Ballaststoffen von 0,1 bis 3 Gew.-%, von 0,1 bis 2 Gew.-% oder von 0,1 bis 1 Gew.-%.

8. Verfahren von irgendeinem der Ansprüche 1-7, wobei das Ultrafiltrieren der MF-Permeatfraktion in Schritt (ii) das Diafiltrieren der MF-Permeatfraktion durch eine Ultrafiltrationsmembran umfasst.

9. Verfahren von irgendeinem der Ansprüche 1-8, das ferner umfasst:
Konzentrieren der MF-Retentatfraktion, um eine konzentrierte MF-Retentatfraktion herzustellen; und/oder
Konzentrieren der UF-Retentatfraktion, um eine konzentrierte UF-Retentatfraktion herzustellen.

10. Verfahren von Anspruch 9, wobei das Konzentrieren Umkehrosmose, Vorwärtsosmose oder Nanofiltration umfasst.

11. Verfahren von Anspruch 9 oder 10, wobei Schritt (iii) das Kombinieren der konzentrierten MF-Retentatfraktion, der konzentrierten UF-Retentatfraktion und gegebenenfalls Wasser umfasst, um die Haferzusammensetzung zu bilden.

12. Verfahren von irgendeinem der Ansprüche 1-11, das ferner das Ultrafiltrieren der MF-Retentatfraktion umfasst, um eine zweite UF-Permeatfraktion und eine zweite UF-Retentatfraktion herzustellen.

13. Verfahren von irgendeinem der Ansprüche 1-12, das ferner das Nanofiltrieren der UF-Permeatfraktion und/oder der zweiten UF-Retentatfraktion umfasst, um eine NF-Permeatfraktion und eine NF-Retentatfraktion herzustellen.

14. Verfahren von Anspruch 13, wobei Schritt (iii) das Kombinieren der MF-Retentatfraktion, der UF-Retentatfraktion, der NF-Retentatfraktion und gegebenenfalls Wasser umfasst, um die Haferzusammensetzung zu bilden.

15. Verfahren von irgendeinem der Ansprüche 1-14, wobei
ein pH-Wert der Haferbasis in Schritt (i) vor der Mikrofiltration von 8 bis 11, von 8,5 bis 11, von 9 bis 11, von 8 bis 10, von 8,5 bis 10 oder von 9 bis 10 beträgt; und
ein pH-Wert der MF-Permeatfraktion in Schritt (ii) vor der Ultrafiltration von 5 bis 8,5, von 5 bis 8, von 5 bis 7,5, von 5,5 bis 8,5, von 5,5 bis 8, von 6 bis 8,5, von 6 bis 8 oder von 6 bis 7,5 beträgt.

16. Verfahren von irgendeinem der Ansprüche 1-15, wobei:
der Kombinationsschritt ferner das Hinzufügen einer Zutat umfasst, wobei die Zutat einen Zucker/Süßstoff, einen Geschmacksstoff, ein Konservierungsmittel, einen Stabilisator, einen Emulgator, eine präbiotische Substanz, ein probiotisches Bakterium, ein Vitamin, ein Mineral, eine Omega-3-Fettsäure, ein Phytosterol, ein Antioxidans, einen Farbstoff oder irgendeine Kombination davon umfasst; und
das Verfahren fernen einen Schritt der Hitzebehandlung der Haferzusammensetzung und/oder einen Schritt des Verpackens der Haferzusammensetzung in einem Behälter umfasst.

17. Verfahren von irgendeinem der Ansprüche 1-16, wobei:
das Verfahren ferner einen Schritt der enzymatischen Vorbehandlung der Haferbasis vor Schritt (i) umfasst; und/oder
das Verfahren ferner einen Schritt des Mahlens eines Haferprodukts und des Hinzufügens von Wasser und optional einer Säure oder einer Base umfasst, um die Haferbasis zu bilden.

## Revendications

1. Procédé de préparation d'une composition d'avoine, le procédé comprenant :
(i) la microfiltration d'une base d'avoine pour produire une fraction de perméat MF et une fraction de rétentat MF, dans lequel la base d'avoine est **caractérisée par** :
une teneur en protéines de 0,1 à 4 % en poids ;
une teneur en matière grasse d'environ 0 à 5 % en poids; une teneur totale en fibres alimentaires de 0,1 à 3 % en poids ;
une teneur en solides de 1 à 12 % en poids ;
un pH de 8 à 11 ; et
dans lequel la fraction de rétentat MF est **caractérisée par** une teneur en solides de 3 à 20 % en poids ;
(ii) l'ultrafiltration de la fraction de perméat MF à une température comprise dans une plage de 3 à 15 °C afin de produire une fraction de perméat UF et une fraction de rétentat UF ; et
(iii) la combinaison de la fraction de rétentat MF, de la fraction de rétentat UF et éventuellement d'eau pour former la composition d'avoine.

2. Procédé selon la revendication 1, dans lequel la base d'avoine est **caractérisée par** une teneur en solides de 3 à 9 % en poids, ou de 5 à 7 % en poids.

3. Procédé selon la revendication 1 ou 2, dans lequel la base d'avoine est **caractérisée par** :
une teneur en protéines de 0,1 à 2,5 % en poids ou de 0,2 à 1,5 % en poids ;
une teneur en matière grasse de 0 à 3,5 % en poids ou de 0 à 2 % en poids ; et
une teneur totale en fibres alimentaires de 0,1 à 2 % en poids ou de 0,1 à 1 % en poids.

4. Procédé selon l'une quelconque des revendications 1-3, dans lequel la base d'avoine est **caractérisée par** :
une teneur en fibres alimentaires solubles de 40 à 100 % en poids, de 50 à 100 % en poids, ou de 60 à 100 % en poids, sur la base de la fibre alimentaire totale ; et
une teneur en fibres alimentaires solubles de faible poids moléculaire de 0 à 100 % en poids, de 10 à 100 % en poids, ou de 50 à 100 % en poids, basée sur la fibre alimentaire soluble.

5. Procédé selon l'une quelconque des revendications 1-4, dans lequel la fraction de rétentat MF est **caractérisée par** :
une teneur en solides de 4 à 18 % en poids, ou de 5 à 12 % en poids ;
une teneur en protéines de 0,5 à 10 % en poids, de 0,5 à 6 % en poids, ou de 0,8 à 5 % en poids ;
une teneur en matière grasse de 0 à 10 % en poids, de 0 à 7 % en poids, ou de 0 à 4 % en poids ; et
une teneur totale en fibres alimentaires de 0,2 à 6 % en poids, de 0,2 à 4 % en poids, ou de 0,2 à 2 % en poids.

6. Procédé selon l'une quelconque des revendications 1-5, dans lequel la fraction de rétentat UF est **caractérisée par** une teneur en solides de 1 à 12 % en poids, de 3 à 9 % en poids, ou de 5 à 7 % en poids.

7. Procédé selon l'une quelconque des revendications 1-6, dans lequel la fraction de rétentat UF est **caractérisée par** :
une teneur en protéines de 0,05 à 7 % en poids, de 0,05 à 4 % en poids, de 0,05 à 1 % en poids, de 0,05 à 0,5 % en poids, de 0,1 à 7 % en poids, ou de 0,5 à 7 % en poids ;
une teneur en matière grasse de 0 à 1 % en poids, de 0 à 0,5 % en poids ou de 0 à 0,2 % en poids ; et
une teneur totale en fibres alimentaires de 0,1 à 3 % en poids, de 0,1 à 2 % en poids, ou de 0,1 à 1 % en poids.

8. Procédé selon l'une quelconque des revendications 1-7, dans lequel l'ultrafiltration de la fraction de perméat MF à l'étape (ii) comprend la diafiltration de la fraction de perméat MF à travers une membrane d'ultrafiltration.

9. Procédé selon l'une quelconque des revendications 1-8, comprenant en outre :
la concentration de la fraction de rétentat MF pour produire une fraction de rétentat MF concentrée ; et/ou
la concentration de la fraction de rétentat UF pour produire une fraction de rétentat UF concentrée.

10. Procédé selon la revendication 9, dans lequel la concentration comprend l'osmose inverse, l'osmose directe ou la nanofiltration.

11. Procédé selon la revendication 9 ou 10, dans lequel l'étape (iii) comprend la combinaison de la fraction de rétentat MF concentrée, de la fraction de rétentat UF concentrée et éventuellement d'eau pour former la composition d'avoine.

12. Procédé selon l'une quelconque des revendications 1-11, comprenant en outre l'ultrafiltration de la fraction de rétentat MF pour produire une seconde fraction de perméat UF et une seconde fraction de rétentat UF.

13. Procédé selon l'une quelconque des revendications 1-12, comprenant en outre la nanofiltration de la fraction de perméat UF et/ou de la seconde fraction de rétentat UF pour produire une fraction de perméat NF et une fraction de rétentat NF.

14. Procédé selon la revendication 13, dans lequel l'étape (iii) comprend la combinaison de la fraction de rétentat MF, de la fraction de rétentat UF, de la fraction de rétentat NF et éventuellement d'eau pour former la composition d'avoine.

15. Procédé selon l'une quelconque des revendications 1-14, dans lequel :
un pH de la base d'avoine à l'étape (i) avant microfiltration va de 8 à 11, de 8,5 à 11, de 9 à 11, de 8 à 10, de 8,5 à 10, ou de 9 à 10 ; et
un pH de la fraction de perméat MF à l'étape (ii) avant ultrafiltration va de 5 à 8,5, de 5 à 8, de 5 à 7,5, de 5,5 à 8,5, de 5,5 à 8, de 6 à 8,5, de 6 à 8 ou de 6 à 7,5.

16. Procédé selon l'une quelconque des revendications 1-15, dans lequel :
l'étape de combinaison comprend en outre l'ajout d'un ingrédient, dans lequel l'ingrédient comprend un sucre/édulcorant, un arôme, un conservateur, un stabilisant, un émulsifiant, une substance prébiotique, une bactérie probiotique, une vitamine, un minéral, un acide gras oméga 3, un phytostérol, un antioxydant, un colorant ou toute combinaison de ceux-ci ; et
le procédé comprend en outre une étape de traitement thermique de la composition d'avoine et/ou une étape de conditionnement de la composition d'avoine dans un récipient.

17. Procédé selon l'une quelconque des revendications 1-16, dans lequel :
le procédé comprend en outre une étape de prétraitement enzymatique de la base d'avoine avant l'étape (i) ; et/ou
le procédé comprend en outre une étape de mouture d'un produit d'avoine, et de l'ajout d'eau et éventuellement d'un acide ou d'une base pour former la base d'avoine.
